# DEMANDE DE BREVET EUROPEEN

(11) **EP 4 799 936 A1**
(43) Date de publication de la demande: **02.09.2026**
(21) Numéro de dépôt: 25223759.9
(22) Date de dépôt: 16.12.2025
(51) Int. Cl.: B64D 27/40

(54) **ENSEMBLE POUR AERONEF COMPORTANT UNE TURBOMACHINE, UN PYLONE ET UN SYSTEME DE FIXATION**

(30) Priorité: 28.02.2025 FR 2502088
(71) Demandeur: AIRBUS OPERATIONS (S.A.S.), 31060 Toulouse (FR)
(72) Inventeur: BESSAH, Naïm Boubaker, 77550 MOISSY-CRAMAYEL (FR); COCHARD, Quentin Arnaud Thibaut, 77550 MOISSY-CRAMAYEL (FR)
(74) Mandataire: Airbus-OPS SAS

(57) **Abrégé**

Ensemble pour un aéronef comportant une turbomachine (100), un pylône (20) comprenant une extrémité amont (21) et un système de fixation (50) de la turbomachine (100) au pylône (20), la turbomachine s'étendant selon un axe longitudinal (XX) orienté dans un sens d'un écoulement généré par la turbomachine, la turbomachine comportant, selon l'axe longitudinal (XX), un carter amont (104), un carter intermédiaire (105), un carter de turbine (106) et un carter d'échappement (107), le système de fixation comprenant des moyens de fixation amont (40) comportant des premiers moyens de suspension (41) de la turbomachine au pylône fixés au niveau du carter amont (104) de la turbomachine et des moyens de fixation aval (60) de la turbomachine au pylône fixés au niveau du carter intermédiaire (105) de la turbomachine, dans lequel les moyens de fixation amont comportent des deuxièmes moyens de suspension (42) de la turbomachine au pylône fixés au niveau du carter intermédiaire (105), les premiers et deuxièmes moyens de suspensions étant fixés au pylône dans un même plan (P) perpendiculaire à l'axe longitudinal (XX).

## Description

### Domaine technique de l'invention

L'invention concerne le domaine des fixations d'une turbomachine à un aéronef. En particulier, l'invention concerne un ensemble pour aéronef comportant une turbomachine, un pylône et un système de liaison de la turbomachine au pylône.

### Etat de la technique antérieure

Des systèmes existants de fixation d'une turbomachine sur un pylône d'aéronef sont décrits, par exemple, dans les documents WO2022/245363, WO2022/248791 ou encore WO2023/198962.

Une turbomachine comporte généralement, dans un sens d'écoulement, une section d'entrée, une section de compresseur, une section de combustion, une section de turbine et une section d'échappement. En fonctionnement, l'air pénètre par la section d'entrée, et s'écoule vers la section de compresseur où un ou plusieurs compresseurs axiaux compriment progressivement l'air jusqu'à ce que ce dernier atteigne la section de combustion, où sont générés des gaz de combustion. Les gaz de combustion s'écoulent alors de la section de combustion le long d'un chemin de gaz chaud défini dans la section de turbine et sortent ensuite de la section de combustion par la section d'échappement. Une telle turbomachine produit une poussée permettant de propulser un véhicule automobile, comme un aéronef par exemple. Sur un aéronef, la poussée ainsi générée par la turbomachine génère des efforts de poussée transmis à un support, par exemple un pylône ou un berceau, et de même le véhicule applique des forces de réaction égales et opposées sur le support. Cette charge induit un moment de tangage ou un moment de lacet dans la turbomachine. Il est donc nécessaire de réduire ces moments de tangage et de lacet appliqués à la turbomachine afin que cette dernière ne se déforme pas au point de dégrader ses performances en fonctionnement.

En effet, lorsque la turbomachine produit une poussée et est soumise à des charges de manoeuvres (efforts aérodynamiques sur une nacelle ou une hélice associées à la turbomachine), la turbomachine en elle-même est soumise à des efforts. Le fléchissement (ou « back-bone bending » selon la terminologie anglo-saxonne) d'un carter de la turbomachine, induit du fait de ces efforts, crée des fermetures de jeux, voire des usures dégradant la performance de la turbomachine, augmentant ainsi une consommation du carburant et un vieillissement de la turbomachine.

Dans le cadre de turbomachine non carénée généralement utilisée sur des aéronefs court ou moyen-courrier, l'accrochage de la turbomachine est important dans le sens où l'hélice de la turbomachine est de grand diamètre et donc cela induit des charges de moments axiaux importantes. De plus, la turbomachine présente, pour avoir des performances élevées, un corps haute pression de petite taille qui est donc sensible à toutes les sollicitations comme les charges gravitaires, les manœuvres avions ainsi que les charges de moments axiaux.

Une suspension classique de turbomachine avec une attache amont sur un carter amont et une attache aval sur un carter de turbine ou un carter d'échappement ne permet pas d'optimiser les performances de l'ensemble turbomachine et berceau ou pylône d'aéronef.

Une autre solution connue, du document WO2022/245363, est de positionner une suspension aval sur le carter en amont d'un corps haute pression (solution corps haute pression en porte-à-faux). Les moments fléchissants induits par les efforts aérodynamiques en amont de la turbomachine et la poussée ne transiteront plus dans le corps haute pression. De plus, cette solution peut créer de forts déplacements entre le pylône et la turbomachine au niveau du corps haute pression non tenu par des suspensions, notamment lorsque la turbomachine subit des facteurs d'accélération, sous accélération gravitaire et manœuvre avion provoquant des consommations de jeux importantes et des déplacements turbomachine versus pylône. Par ailleurs, les deux plans de suspensions étant proches, il est difficile d'atteindre un bon compromis de rigidité entre le pylône et le carter amont, ce qui conduit également à avoir des consommations de jeux importantes entre la turbomachine et le pylône sous charge de moments axiaux.

Par ailleurs, des solutions quasi-isostatiques ont été imaginées pour mitiger ces problèmes mais soit le volume de l'interface et de l'avant du pylône nécessaire pour tenir la turbomachine en amont et faire passer les charges ont l'inconvénient de dégrader l'aérodynamique et de complexifier l'intégration, soit l'hélice se retrouve en porte-à-faux ce qui complexifie le dimensionnement côté turbomachine (impact masse).

Le document US 2016/238032 A1 et le document US 2024/327008 A1 décrivent chacun un ensemble pour aéronef comportant une turbomachine, un pylône et un système de fixation de la turbomachine au pylône selon l'art antérieur.

### Exposé de l'invention

Un but de l'invention est de fournir un ensemble pour aéronef comportant une turbomachine, un pylône et un système de fixation de la turbomachine au pylône qui ne présente pas les inconvénients de l'art antérieur.

À cette fin, il est prévu, selon l'invention, un ensemble pour un aéronef comportant une turbomachine, un pylône comprenant une extrémité amont et un système de fixation de la turbomachine au pylône, la turbomachine s'étendant selon un axe longitudinal orienté selon un axe X, orienté dans un sens d'un écoulement généré par la turbomachine, d'un repère orthonormé comprenant un axe Z orienté vers le pylône, la turbomachine comportant, selon l'axe longitudinal, un carter amont, un carter intermédiaire et un carter aval, le système de fixation comprenant des moyens de fixation amont comportant des premiers moyens de suspension de la turbomachine au pylône fixés au niveau du carter amont de la turbomachine et des moyens de fixation aval de la turbomachine au pylône fixés au niveau du carter intermédiaire de la turbomachine, dans lequel les moyens de fixation amont comportent des deuxièmes moyens de suspension de la turbomachine au pylône fixés au niveau du carter intermédiaire, les premiers et deuxièmes moyens de suspensions étant fixés au pylône dans un même plan perpendiculaire à l'axe longitudinal. Les premiers moyens de suspension comportent une première bielle amont et une deuxième bielle amont.

Avantageusement, mais facultativement, l'ensemble selon l'invention présente au moins l'une des caractéristiques techniques suivantes :
- le plan perpendiculaire à l'axe longitudinal est un plan passant par le carter intermédiaire ;
- les premiers et deuxièmes moyens de suspensions sont fixés au pylône au niveau de l'extrémité amont du pylône ;
- les premières et deuxièmes bielles amont comprennent chacune une première extrémité et une deuxième extrémité, chacune des premières extrémités et deuxièmes extrémités comprenant une liaison rotulée ;
- les première et deuxième bielles amont sont positionnées en « V », une pointe du « V » étant orientée vers l'amont ;
- les deuxièmes moyens de suspension comprennent une première et une deuxième bielles aval s'étendant dans un plan YZ perpendiculaire à l'axe longitudinal ;
- les bielles aval sont parallèles à l'axe Z ;
- les bielles aval sont inclinées par rapport à l'axe Z ;
- les bielles aval sont bi-rotulées ;
- les moyens de fixation aval comportent deux bielles de reprise positionnées en « V », une pointe du « V » étant orientée vers l'aval et fixée au pylône ;
- le système de fixation comporte une liaison souple positionnée entre un carter aval, formé par le carter de turbine et/ou le carter d'échappement, au pylône et s'étendant dans un plan YZ perpendiculaire à l'axe longitudinal ; et,
- l'extrémité amont du pylône est au droit du carter intermédiaire.

Il est aussi est prévu, selon l'invention, un aéronef comportant un ensemble présentant au moins l'une des caractéristiques techniques précédentes.

### Brève description des figures

D'autres caractéristiques et avantages de l'invention ressortiront à la lecture de la description qui suit d'un mode de réalisation de l'invention. Aux dessins annexés :

La figure 1 est une vue en trois dimensions d'un ensemble pour aéronef selon l'invention, comportant une turbomachine, un pylône et un système de liaison de la turbomachine au pylône ; et,

La figure 2 est une vue schématique de dessus de l'ensemble de la figure 1 ;

Pour plus de clarté, les éléments identiques ou similaires sont repérés par des signes de référence identiques sur l'ensemble des figures.

### Description détaillée d'un mode de réalisation

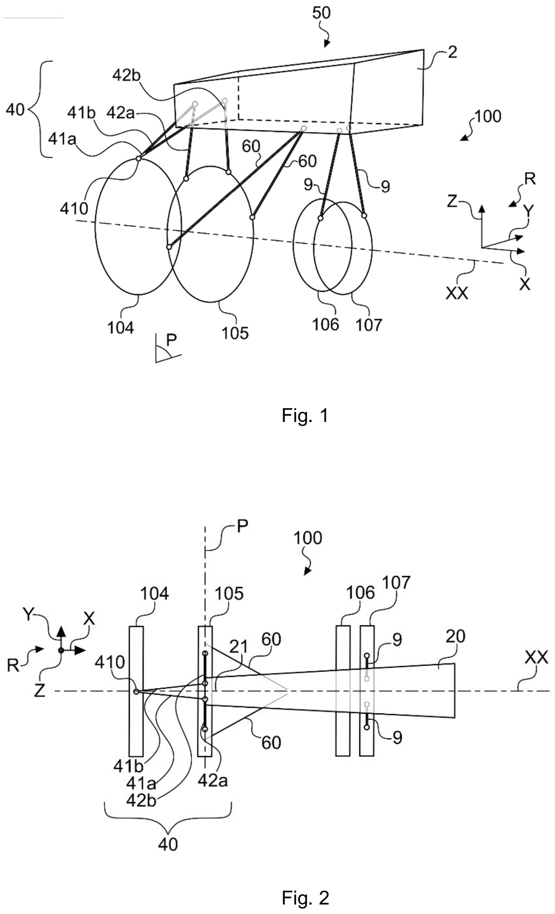

En référence à la figure 1 et à la figure 2, nous allons décrire un mode de réalisation d'un ensemble pour aéronef comportant une turbomachine 100, un pylône 20 et un système de fixation 50 de la turbomachine 100 selon l'invention.

Ici, la turbomachine 100 comporte en outre un carter amont 104, un carter intermédiaire 105, un carter de turbine 106 et un carter d'échappement 107. Il est à noter que généralement le carter amont 104 est encore appelé « Propeller Frame » selon la terminologie anglo-saxonne et entoure une hélice. Le carter intermédiaire 105 est encore appelé « Mid Frame » selon la terminologie anglo-saxonne. D'autre part, le carter de turbine 6 (encore appelé « Turbine Vane Frame » selon la terminologie anglo-saxonne) est généralement équipé de bras formant des aubages de redresseur, et le carter d'échappement 7 (encore appelé « Turbine Rear Frame » selon la terminologie anglo-saxonne) est le dernier carter de la turbomachine 1. En outre, la turbomachine 100 comprend notamment une hélice de préférence non carénée, un compresseur, une chambre de combustion et une turbine. Il est à noter que le pylône 20 comporte une extrémité amont 21 qui est située, une fois la turbomachine 100 fixée, au droit du carter intermédiaire 105. La turbomachine 100 s'étendant selon un axe longitudinal XX orienté selon un axe X, orienté dans un sens de l'écoulement généré par la turbomachine, d'un repère R orthonormé comprenant un axe Z orienté vers le pylône, et un axe Y. Selon un type de fixation de la turbomachine 100 sur l'aéronef, l'axe Z est vertical si la fixation est sous une aile, ou l'axe Z est horizontal si la fixation est en arrière d'un fuselage de l'aéronef.

Le système de fixation 50 comprend des moyens de fixation amont 40 en deux parties : une première partie formée de premiers moyens de suspension 41 positionnés entre l'extrémité amont 21 du pylône 20 et le carter amont 104 ; et une deuxième partie formée de deuxièmes moyens de suspension 42 positionnés entre l'extrémité amont 21 du pylône 20 et le carter intermédiaire 105.

Les premiers moyens de suspension comprennent ici deux bielles amont 41 positionnées en « V ». Les bielles amont 41 sont chacune bi-rotulées et pointent vers l'hélice 7 et sont inclinées par rapport l'axe X et l'axe Z. Les bielles amont 41 sont fixée au carter amont 104 au niveau d'un point de fixation 410 situé au voisinage de l'axe Z sur une périphérie externe du carter amont 104. Au niveau de l'extrémité amont 21 du pylône 20, les bielles amont 41 sont fixées en des points de fixation espacés selon l'axe Y. ainsi, en vue de dessus, les bielles amont 41 forment un « V » dont la pointe est orientée vers l'amont. Les bielles amont 41 formant les premiers moyens de suspension permettent de reprendre une poussée délivrée par la turbomachine 100 ainsi que des moments de tangages.

Il est à noter qu'il entendu par « bielle bi-rotulée », une bielle comprenant une première extrémité et une deuxième extrémité, chacune des première extrémité et deuxième extrémités comprenant une liaison rotulée.

Les deuxièmes moyens de suspensions comportent ici deux bielles aval 42 qui sont ici inclinées dans un plan YZ passant par le carter intermédiaire 105 et par rapport à l'axe Z. Les bielles aval 42 sont symétriques en miroir l'une par rapport à l'autre. En variante, les bielles aval 42 sont verticales, c'est-à-dire parallèles à l'axe Z. les bielles aval 42 sont ici bi-rotulées. Elles sont fixées d'une part sur le carter intermédiaire 105 dans le plan YZ précédent et sur l'extrémité amont 21 du pylône 20. Au niveau du pylône 20, les bielles aval 42 sont fixées au voisinage des points de fixations des bielles amont 41. Les bielles aval 42 permettent de reprendre le couple moteur issu de la turbomachine 100 et des efforts verticaux et/ou latéraux.

D'autre part, le système de fixation 50 comporte des moyens de fixation aval 60 comportant ici deux bielles 60 de reprise de poussée. Les bielles 60 sont ici au nombre de deux et s'étendent entre le carter intermédiaire 105 où elles sont fixées au niveau du plan YZ passant par le carter intermédiaire 105 et le pylône 20 où elles sont fixées, sans palonnier, en arrière de l'extrémité amont 21 et sous le pylône 20. Les bielles 60 sont inclinées par rapport à l'axe Y et l'axe Z. Les bielles 60 sont symétriques en miroir l'une par rapport à l'autre et forment en vue de dessus un « V » dont la pointe est orientée en aval. Les bielles 60 permettent de reprendre la poussée et des moments de lacet.

De plus, le système de fixation 50 comporte une ou plusieurs liaisons souples 9 positionnées entre un carter aval formé par le carter de turbine 106 et/ou le carter d'échappement 107 au pylône 20 et s'étendant dans un plan YZ. Le rôle de cette (ces) liaison(s) souple(s) 9 est de limiter un impact d'efforts inertiels tout en limitant les moments fléchissants liés aux efforts venant du couple moteur généré par la turbomachine 100 pour reprendre des facteurs de charges de manoeuvres verticaux et éventuellement latéraux. Une souplesse de ces liaisons 9 est adaptée pour trouver le meilleur compromis entre les effets inertiels et les moments aérodynamiques de l'hélice de la turbomachine 100.

La mise en oeuvre d'un tel système de fixation 50 tel que précédemment décrit permet de mieux répartir les efforts dans le pylône 20 et donc de limiter les déplacements relatifs entre la turbomachine 100 et le pylône 20 tout en protégeant une partie arrière de la turbomachine100 des moments fléchissants. Une telle solution apporte également les avantages suivants : la reprise de couple sur le carter intermédiaire 105 permet de s'appuyer sur une plus grande section du pylône 20 plus adaptée pour la transmission d'efforts sans trop de torsion ; l'inclinaison des bielles amont 41 positionnées en « V » permet d'approcher le point de convergence des efforts au niveau de l'hélice (ceci permet de diminuer le moment résultant des efforts de couple moteur en diminuant un bras de levier de ce dernier par rapport à une projection sur l'axe longitudinal XX des suspensions (Des bielles amont 41 ?)); le fait de remplacer une section de pylône amont de l'art antérieur (travaillant en flexion/torsion) par deux bielles amont 41 (aval 42 ?) bi-rotulées (travaillant donc en traction/compression) permet de raccourcir le pylône 20 (dont l'extrémité amont 21 est alors au droit du carter intermédiaire 105) et par conséquent de drastiquement réduire l'impact aérodynamique de l'OGV (acronyme anglo-saxon pour « Outer Guide Vane » ou sortie de flux secondaire) et de l'aile des moyens de fixation amont 40 de la turbomachine (reprise YZ), les bielles amont 41 étant ainsi enterrées et inclinées en « V » et ne formant pas un « mur » contrairement à une grosse section de pylône pour l'écoulement en amont ; les moyens de fixation amont 40 entre la turbomachine 100 et le pylône 20 sont fixés au pylône au niveau du plan YZ passant par le carter intermédiaire 105 ce qui facilite la maintenance sous aile (pour la partie moteur, cette fixation est cependant toujours près des OGVs) ; et, le système de bielles amont 41 en « V » est plus léger que section de pylône amont de l'art antérieur qu'elles remplacent.

Naturellement, l'invention est décrite dans ce qui précède à titre d'exemple. Il est entendu que la personne de l'art est à même de réaliser différentes variantes de réalisation de l'invention sans pour autant sortir du cadre de l'invention.

Il est souligné que toutes les caractéristiques, telles qu'elles se dégagent pour une personne de l'art à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Ensemble pour un aéronef comportant une turbomachine (100), un pylône (20) comprenant une extrémité amont (21) et un système de fixation (50) de la turbomachine (100) au pylône (20), la turbomachine s'étendant selon un axe longitudinal (XX) orienté selon un axe X, orienté dans un sens d'un écoulement généré par la turbomachine, d'un repère (R) orthonormé comprenant un axe Z orienté vers le pylône, la turbomachine comportant, selon l'axe longitudinal (XX), un carter amont (104), un carter intermédiaire (105) et un carter aval (106,107), le système de fixation comprenant des moyens de fixation amont (40) comportant des premiers moyens de suspension (41) de la turbomachine au pylône fixés au niveau du carter amont (104) de la turbomachine et des moyens de fixation aval (60) de la turbomachine au pylône fixés au niveau du carter intermédiaire (105) de la turbomachine, dans lequel les moyens de fixation amont comportent des deuxièmes moyens de suspension (42) de la turbomachine au pylône fixés au niveau du carter intermédiaire (105), les premiers (41) et deuxièmes (42) moyens de suspensions étant fixés au pylône dans un même plan (P) perpendiculaire à l'axe longitudinal (XX), **caractérisé en ce que** les premiers moyens de suspension comportent une première bielle amont (41a) et une deuxième bielle amont (41b).

2. Ensemble selon la revendication 1, dans lequel le plan (P) perpendiculaire à l'axe longitudinal (XX) est un plan passant par le carter intermédiaire (105).

3. Ensemble selon l'une des revendications 1 à 2, dans lequel les premiers et deuxièmes moyens de suspensions sont fixés au pylône au niveau de l'extrémité amont (21) du pylône (20).

4. Ensemble selon l'une quelconque des revendications précédentes, dans lequel les premières et deuxièmes bielles amont comprennent chacune une première extrémité et une deuxième extrémité, chacune des premières extrémités et deuxièmes extrémités comprenant une liaison rotulée.

5. Ensemble selon l'une quelconque des revendications précédentes, dans lequel les première et deuxième bielles amont (41a, 41b) sont positionnées en « V », une pointe du « V » étant orientée vers l'amont.

6. Ensemble selon l'une des revendications précédentes, dans lequel les deuxièmes moyens de suspension comprennent une première (42a) et une deuxième (42b) bielles aval s'étendant dans un plan YZ perpendiculaire à l'axe longitudinal (XX).

7. Ensemble selon l'une des revendications précédentes, dans lequel les moyens de fixation aval comportent deux bielles (60) de reprise positionnées en « V », une pointe du « V » étant orientée vers l'aval et fixée au pylône.

8. Ensemble selon l'une des revendications précédentes, dans lequel le système de fixation comporte une liaison souple 9 positionnée entre un carter aval, formé par le carter de turbine 106 et/ou le carter d'échappement 107, au pylône 20 et s'étendant dans un plan YZ perpendiculaire à l'axe longitudinal (XX).

9. Aéronef comportant un ensemble selon l'une des revendications 1 à 8.
